# EUROPÄISCHE PATENTSCHRIFT

(11) **EP 0 927 654 B1**
(45) Veröffentlichungstag und Bekanntmachung des Hinweises auf die Patenterteilung: **03.04.2002**
(21) Anmeldenummer: 98123699.5
(22) Anmeldetag: 12.12.1998
(51) Int. Cl.: B60J 7/20

(54) **Anlenkung für einen Verdeckkastendeckel**
Linkage for soft top storage compartment lid
Articulation pour couvercle de coffre de capote

(30) Priorität: 05.01.1998 DE 19800156
(43) Veröffentlichungstag der Anmeldung: 07.07.1999
(73) Patentinhaber: Edscha Cabrio-Dachsysteme GmbH, 94491 Hengersberg (DE)
(72) Erfinder: Haberl, Franz, 94574 Wallerfing (DE); Striegl, Theodor, 84140 Gangkofen (DE)
(74) Vertreter: Sparing, Rolf Klaus

(56) Entgegenhaltungen:
- EP-A- 0 846 584
- DE-C- 19 525 587
- FR-A- 2 696 375
- US-A- 3 575 464

## Beschreibung

Die Erfindung betrifft eine Anlenkung für einen Verdeckkastenhebel , welcher mittels zweier seitlich zueinander beabstandeter und jeweils aus wenigstens einem, vermittels einer ersten Schwenklagerung an der Fahrzeugkarosserie und vermittels einer zweiten Schwenklagerung am Verdeckkastendeckel angelenkten Schamierarm bestehender Scharniervorrichtungen um eine im Bereich des rückwärtigen Öffnungsrandes des Verdeckkastens verlaufende Achse derart schwenkbar an der Fahrzeugkarosserie angelenkt ist, daß er im Verlauf seiner Öffnungs- und Schließbewegung eine von einer Kippbewegung überlagerte Schwenkbewegung ausführt und in seiner Öffnungsstellung die Öffnung des Verdeckkastens vollständig freigibt.

Verdeckkastendeckel für die Verdeckkästen von mit einem Klappverdeck ausgestatteten Fahrzeugen sind üblicherweise vermittels einfacher Anlenkungen an der Wandung des Verdeckkastens oder unmittelbar benachbarten Karosserieteilen angelenkt. Bei einer bekannten und gebräuchlichen Bauart einer Anlenkung von Verdeckkastendeckeln von mit einem Klappverdeck ausgestatteten Fahrzeugen ist der Verdeckkastendeckel mittels eines Paares U-förmig gekrummter Scharnierarme an der Verdeckkastenrückwand angelenkt, derart, daß der Verdeckkastendeckel in einer Klappbewegung aus einer zur Karosseriekontur fluchtenden Schließlage heraus in eine wenigstens annähernd vertikal aufragende Öffnungstellung verschwenkbar ist.

Bei mit einer starren Heckscheibe ausgestatteten Klappverdecken und verhältnismäßig klein bzw. knapp bemessenem Verdeckkasten ist für die im Zuge des Öffnens des Verdeckes erforderliche Schwenkbewegung des Stoffspannbügels und der Heckscheibe ein verhältnismäßig großer Verschwenkbereich erforderlich, wenn der Verdeckkastendeckel in der herkömmlichen Weise in einer einfachen Klappbewegung um den hinteren Rand des Verdeckkastens öffnet. Unter ungünstigen Umständen ist dabei zum Öffnen des Verdeckkastendeckels ein Hochschwenken des Stoffspannbügels bis in eine annähernd senkrechte Stellung notwendig.

Bei mit einer verhältnismäßig großflächigen starren Heckscheibe ausgestatteten Verdecken kann dabei die Gefahr auftauchen, daß die Heckscheibe beim Öffnen des Verdeckes in den Bereich der erforderlichen Kopffreiheit für die auf den Fahrzeugrücksitzen befindlichen Passagiere gelangt, was zumindest höchst unerwünscht ist, weil es die auf den Rücksitzen befindlichen Personen zwingt das Fahrzeug zu verlassen, wenn das Verdeck geöffnet werden soll. Mit Hilfe der bekannten und gebräuchlichen Anlenkung des Verdeckkastendeckels über U-förmige Scharnierarme läßt sich eine ein Einlaufen des Verdeckes in den Verdeckkasten bereits bei einem geringen Anheben des Stoffspannbügels und damit der Heckscheibe gewährleistende Öffnungslage des Verdeckkastendeckels nicht oder jedenfalls nicht ohne Inkaufnahme einerseits eines verhältnismäßig hohen Montageaufwandes erreichen.

In der nachveröffentlichten EP 0 846 584 A1 ist eine Anlenkung für einen Verdeckkastenhebel beschrieben, welcher mittels zweier seitlich zueinander beabstandeter und jeweils aus wenigstens einem, vermittels einer ersten Schwenklagerung an der Fahrzeugkarosserie und vermittels einer zweiten Schwenklagerung am Verdeckkastendeckel angelenkten Scharnierarm bestehender Schamiervorrichtungen um eine im Bereich des rückwärtigen Öffnungsrandes des Verdeckkastens verlaufende Achse derart schwenkbar an der Fahrzeugkarosserie angelenkt ist, daß er im Verlauf seiner Öffnungs- und Schließbewegung eine von einer Kippbewegung überlagerte Schwenkbewegung ausführt und in seiner Öffnungsstellung die Öffnung des Verdeckkastens vollständig freigibt.

Der Erfindung liegt die Aufgabe zugrunde, eine Anlenkung für den Verdeckkastendeckel eines mit einem Klappverdeck ausgestatteten Cabriolet-Fahrzeuges zu schaffen, welche bei geringem Herstellungs- und Montageaufwand eine das Öffnen des Verdeckkastens auch bereits bei lediglich geringem Anhebewinkel des Stoffspannbügels gestattende Freigabe der Öffnung des Verdeckkastens gewährleistet.

Diese Aufgabe wird erfindungsgemäß durch eine Anlenkung mit den Merkmalen des Patentanspruchs 1 gelöst. Diese Ausbildung der Scharniervorrichtungen gestattet es, den Verdeckkastendeckel zunächst unter vermehrtem

Anheben seines hinteren Endes in eine nach vorne gekippte erste, dem rückwärtigen Rand des Verdeckkastens gegenüber vermehrt angehobene Teilöffnungslage und anschließend im Zuge einer von einer nach hinten gerichteten Verlagerung überlagerten Kippbewegung in eine aufragende Öffnungsendstellung, in welcher er mit seinem vorderen Ende vermehrt angehoben ist, auszustellen. Daraus resultiert die Möglichkeit, den Verdeckkastendeckel bereits bei nur geringfügig angehobenen Stoffspannbügel und demgemäß nur geringfügig nach vorne gekippter starrer Heckscheibe in seine dem Einlaufen des Verdeckes in den Verdeckkasten zugeordnete Öffnungsendlage zu verbringen. Im weiteren resultiert aus der Tatsache, daß der Stoffspannbügel zum Öffnen des Verdeckes nunmehr nur noch geringfügig angehoben werden muß, auch eine beträchtliche Verkürzung der für das Öffnen des Verdeckes erforderlichen Zeit.

In einer bevorzugten Verwirklichungsform einer solchen Verdeckkastendeckelanlenkung ist vorgesehen, daß eine verlagerbare Anlenkachse der karosserieseitigen Schwenklagerung lediglich eines der beiden jeweils ein Gelenkhebelparallelogramm bildenden Scharnierarme zugeordnet ist und daß im Weiteren der verlagerbaren Anlenkachse des einen Scharnierarmes jedes Gelenkhebelparallelogrammes jeweils eine Zwangssteuerung zur Erzwingung einer vertikalen Verlagerung in Abhängigkeit von der Schwenkbewegung des Verdeckkastendeckels zugeordnet ist.

Die Zwangssteuerung zur Erzwingung einer vertikalen Verlagerung der Anlenkachse des einen Scharnierarmes in Abhängigkeit von der Schwenkbewegung des Verdeckkastendeckels kann in unterschiedlichster Weise ausgebildet werden, beispielsweise mittels einer Kulissenführung. Eine mit einem besonders geringen Aufwand realisierbare Gestaltungsform einer Zwangssteuerung zur Erzwingung einer vertikalen Verlagerung der Anlenkachse des einen Scharnierarmes in Abhängigkeit von der Schwenkbewegung des Verdeckkastendeckels sieht jedoch vor, daß die eine vertikale Verlagerung der Anlenkachse des einen Scharnierarmes bewirkende Zwangssteuerung durch eine drei untereinander ungleich lange Lenker umfassende Lenkeranordnung gebildet ist, wobei zweckmäßigerweise weiter vorgesehen ist, daß die die Zwangssteuerung zur Verlagerung der Anlenkachse des einen Scharnierarmes bewirkende Lenkeranordnung einen Traglenker, einen Steuerlenker und einen Koppellenker umfaßt und der Trag- und der Steuerlenker um in einer gemeinsamen Ebene angeordnete Lagerachsen an der Fahrzeugkarosserie angelenkt sind, wobei die Lagerachse des Steuerlenkers koaxial zur Anlenkung des zweiten Scharnierarmes des Gelenkhebelparallelogrammes angeordnet ist.

Zur Erzwingung einer vertikal gerichteten und über den Öffnungsvorgang des Verdeckkastendeckels hin reversiblen Verlagerung der Anlenkachse des einen Scharnierarmes ist vorteilhaft weiter vorgesehen, daß der Abstand der karosserieseitigen Anlenkungen des Steuer- und des Traglenkers dem Abstand der Anlenkung des Koppellenkers am Traglenker zu dessen karosserieseitiger Anlenkung entspricht und daß die Länge des Steuerlenkers gleich groß oder kleiner ist als die Hälfte des Abstandes seiner karosserieseitigen Anlenkung zur karosserieseitigen Anlenkung des Traglenkers. Dies ermöglicht eine Schwenkbeweglichkeit des Steuerlenkers über einen Schwenkwinkel von mehr als 90° und daraus resultierend einen Kippwinkel des Verdeckkastendeckels über einen entsprechenden Winkelbereich hin. Darüber hinaus eröffnet eine variable Längenabstimmung einerseits der verschiedenen Lenker einerseits zueinander und andererseits eine in Abhängigkeit von der gewählten Längeabstimmung der Lenker wählbare Länge des einen Scharnierarmes die Erreichung einer praktisch unbegrenzten Größe der Klappbewegung des Verdeckkastendeckels im Verlauf seiner Öffnungsbewegung.

In weiterer Ausgestaltung der erfindungsgemäßen Verdeckkastendeckelanlenkung kann weiter vorgesehen werden, daß der Scharnierarm mit einem Abstand zur Anlenkung des Koppellenkers am freien Ende des Traglenkers angelenkt ist.

Im weiteren ist zur Erzielung einer möglichst großen Freigabe der Öffnung des Verdeckkastens weiter vorgesehen, daß die beiden das Gelenkhebelparallelogramm bildenden Scharnierarme in an sich bekannter Weise eine an ihre karosserieseitige Schwenklagerung anschließend ausgebildete U-förmige Auskröpfung aufweisen und in Fahrzeuglängsrichtung hintereinanderliegend angeordnet sind.

Insgesamt besteht daher ein tragendes Merkmal der Erfindung darin, daß der eine um unveränderliche Schwenkachsen einerseits an der Fahrzeugkarosserie und andererseits am Verdeckkastendeckel angelenkte Scharnierarm den außerhalb seiner Schließlage befindlichen Verdeckkastendeckel trägt und der andere Scharnierarm einen Antriebslenker zur Steuerung der Öffnungsbewegung des Verdeckkastendeckels bildet.

Die Erfindung ist in der nachfolgenden Beispielsbeschreibung anhand eines in der Zeichnung dargestellten Ausführungsbeispieles im Einzelnen beschrieben. In der Zeichnung zeigt die
- Fig. 1: eine ausschnittweise Schnittdarstellung einer mit einem Klappverdeck ausgestatteten Fahrzeugkarosserie mit in der Schließstellung befindlichem Verdeckkastendeckel.
- Fig. 2: eine ausschnittweise Schnittdarstellung einer mit einem Klappverdeck ausgestatteten Fahrzeugkarosserie mit in einer ersten Teilöffnungsstellung befindlichem Verdeckkastendeckel.

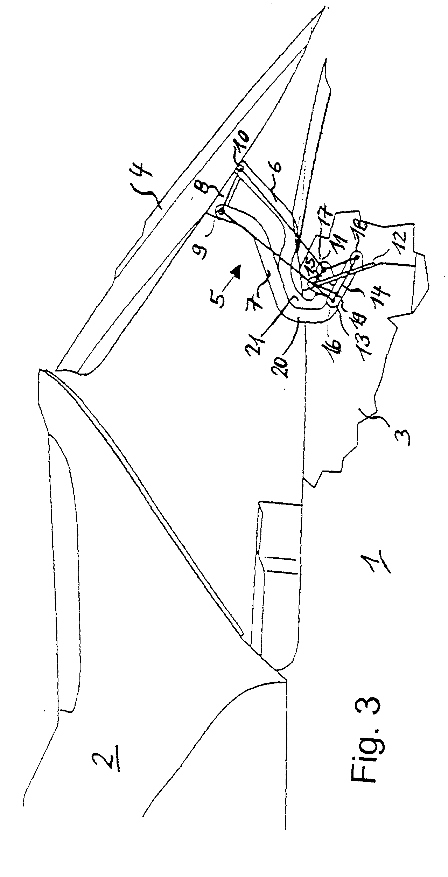

- Fig. 3: eine ausschnittweise Schnittdarstellung einer mit einem Klappverdeck ausgestatteten Fahrzeugkarosserie mit in seiner vollen Öffnungsstellung befindlichem Verdeckkastendeckel, und

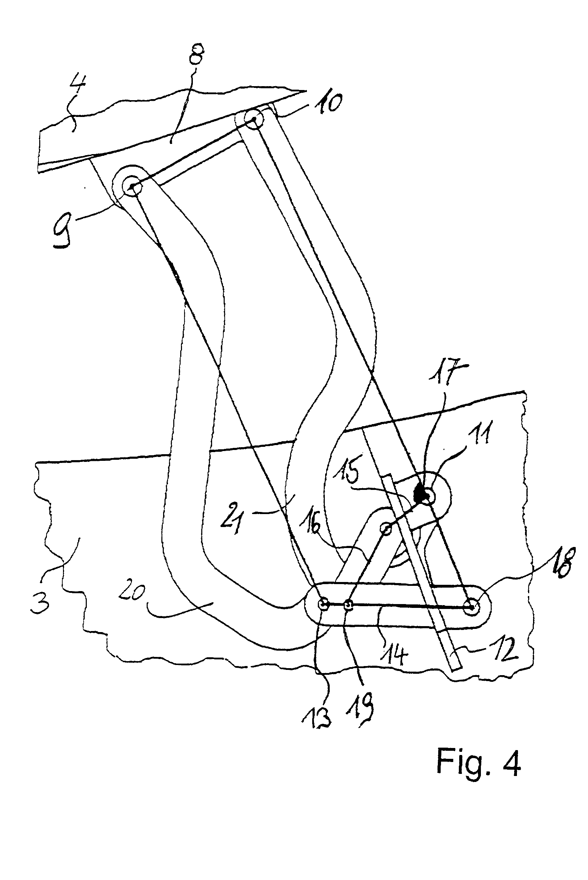

- Fig. 4: eine ausschnittweise Einzeldarstellung zur Fig. 2 im vergrößerten Maßstab.

Eine im Übrigen nicht näher dargestellte Karosserie 1 eines mit einem, gleichfalls nicht in seiner Gesamtheit gezeigten, Klappverdeck 2 ausgestatteten Cabriolet-Fahrzeuges ist mit einem in der Zeichnung andeutungsweise dargestellten Verdeckkasten 3 und einem diesem zugeordneten Verdeckkastendeckel 4 ausgestattet. Der Verdeckkastendeckel 4 ist vermittels zweier in Fahrzeugquerrichtung zueinander beabstandeter Scharniervorrichtungen 5 an der Fahrzeugkarosserie 1 angelenkt, wobei jede Scharniervorrichtung 5 jeweils aus zwei ein Gelenkhebelparallelogramm bildenden Scharnierarmen 6 und 7 besteht und wobei in der gezeigten Ausführungsform die beiden Scharnierarme 6 und 7 vermittels eines gemeinsamen Lagerbockes 8 jeweils über eine Anlenkachse 9 bzw. 10 am Verdeckkastendeckel 4 angelenkt sind. Dabei ist der eine Scharnierarin 6 um eine feststehende Schwenk achse 11 an einem karosserieseitig angeschlagenen Lagerbock 12 angelenkt und bildet bezüglich des außerhalb seiner Schließlage befindlichen Verdeckkastendeckels 4 das tragende Element. Der andere Scharnierarin 7 ist karosserieseitig vermittels einer verlagerbaren Anlenkachse 13 angelenkt. Der verlagerbaren Anlenkachse 13 des einen Scharnierarmes 7 des Gelenkhebelparallelogrammes 5 ist eine Zwangssteuerung zur Erzwingung einer vertikalen Verlagerung in Abhängigkeit von der Schwenkbewegung des Verdeckkastendeckels 4 zugeordnet, welche in der gezeigten Ausführungsform durch eine drei untereinander ungleich lange Lenker umfassende Lenkeranordnung gebildet ist, welche einen Traglenker 14, einen Steuerlenker 15 und einen Koppellenker 16 umfaßt und bei welcher der Traglenker 14 und der Steuerlenker 15 um in einer gemeinsamen Ebene angeordnete Lagerachsen 17 und 18 an der Fahrzeugkarosserie angelenkt sind. Die Lagerachse 17 des Steuerlenkers 15 ist koaxial zur Anlenkung 11 des Scharnierarmes 6 des Gelenkhebelparallelogrammes 5 angeordnet. Der Abstand der karosserieseitigen Anlenkungen 17 und 18 des Steuerlenkers 15 und des Traglenkers 14 entspricht bei der dargestellten Ausführungsform dem Abstand der Anlenkung 19 des Koppellenkers 16 am Traglenker 14 zu dessen karosserieseitiger Anlenkung 18. Die Länge des Steuerlenkers 15 entspricht bei der gezeigten Ausführungsform der Hälfte des Abstandes seiner karosserieseitigen Anlenkung 17 zur karosserieseitigen Anlenkung 18 des Traglenkers 14, derart, daß der Steuerlenker 15 um einen Schwenkwinkel von mehr als 90° beweglich ist und daraus ein Kippwinkel des Verdeckkastendeckels 4 von gleichfalls 900 resultiert. Der Scharnierarm 7 ist hier mit einem Abstand zur Anlenkung 19 des Koppellenkers 16 am freien Ende des Traglenkers 14 angelenkt. Aus der Zeichnung ist weiter ersichtlich, daß die beiden das Gelenkhebelparallelogramm 5 bildenden Scharnierarme 6 und 7 an ihre jeweilige karosserieseitige Schwenklagerung 11 oder. 13 anschließend jeweils eine mehr oder minder ausgeprägte U-förmige Auskröpfung 20 bzw. 21 aufweisen und in Fahrzeuglängsrichtung hintereinanderliegend angeordnet sind.

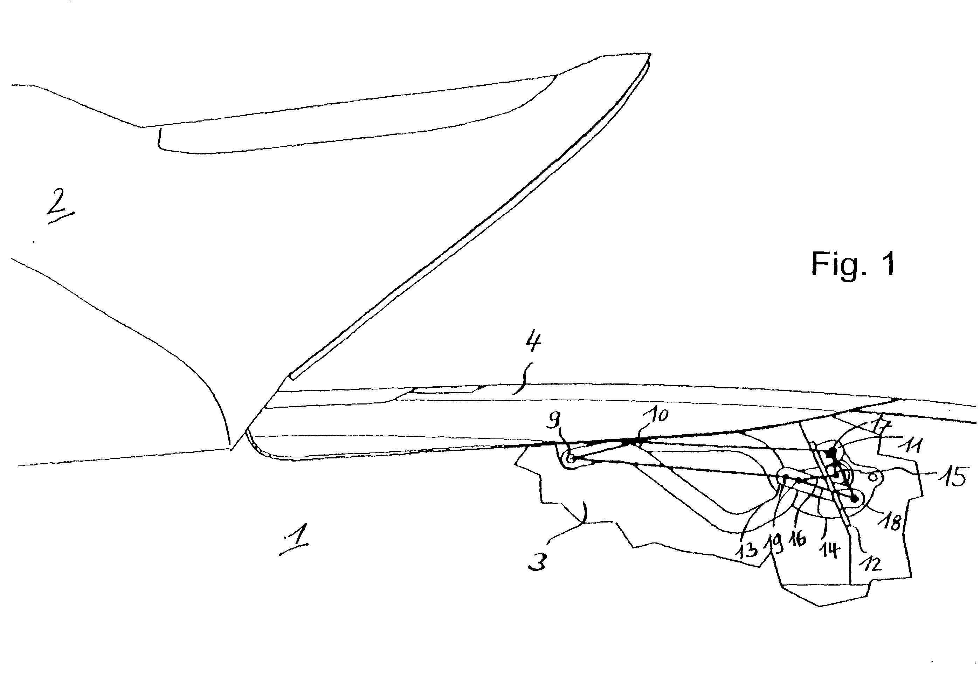

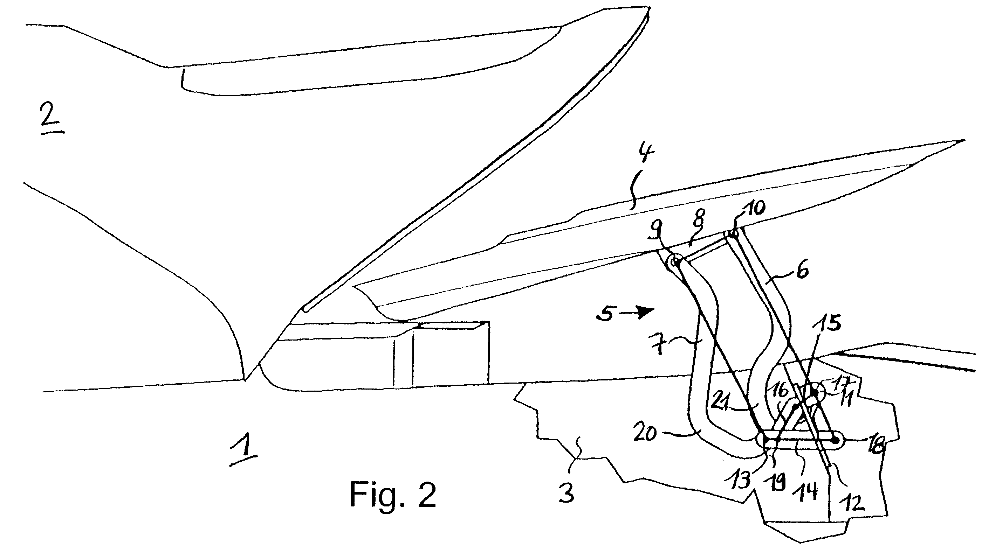

Ausgehend von der in der Figur 1 dargestellten Schließlage des Verdeckkastendeckels 4, bei welcher sich der Traglenker 14 in einer leicht nach oben zeigenden Stellung und der Steuerlenker 15 sich in einer im wesentlichen vertikal nach unten gerichteten Stellung befindet, führt beim Öffnen des Verdeckkastendeckels 4 zunächst der Steuerlenker 15 eine nach vorne oben gerichtete Schwenkbewegung um seine Anlenkachse 17 aus, wodurch der Traglenker 14 vermittels des Koppellenkers 16 um seine karosserieseitige Anlenkachse 18 nach unten verschwenkt wird, was zur Folge hat, daß der Verdeckkastendeckel 4 mit zunehmendem Anheben durch den Schamierarin 7 um die Schwenkachse 10 des Scharnierarmes 6 derart nach unten gekippt wird, daß er in die in Fig. 2 gezeigte Stellung gelangt, in welcher sein vorderer Rand nach unten abgesenkt ist. Im weiteren Verlauf der Öffnungsbewegung setzt der Steuerlenker 15 seine nach vorne und oben gerichtete Schwenkbewegung fort und zwingt vermittels des Koppellenkers 16 dem Traglenker 14 eine wiederum nach oben gerichtete Schwenkbewegung mit der Folge auf, daß nunmehr der Verdeckkastdeckel 4 durch den Scharnierarm 7 um die Schwenkachse 10 des Scharnierarmes 6 derart hinten gekippt wird, daß der Verdeckkastdeckel 4 nunmehr mit seinem vorderen Rand nach oben zeigend die Öffnung des Verdeckkastens 3 in einer solchen Weise freigibt, daß ein Einlaufen des Verdeckes 2 in den Verdeckkasten möglich ist. Beim Schließen des Verdeckes spielt sich der vorstehend für das Öffnen des Verdeckes beschriebene Bewegungsablauf in umgekehrter Richtung und Reihenfolge ab.

## Patentansprüche

1. Anlenkung für einen Verdeckkastendeckel (4), welcher mittels zweier seitlich zueinander beabstandeter und jeweils aus wenigstens einem, vermittels einer ersten Schwenklagerung an der Fahrzeugkarosserie (1) und vermittels einer zweiten Schwenklagerung am Verdeckkastendeckel (4) angelenkten Scharnierarm bestehender Scharniervorichtungen (5) um eine im Bereich des rückwärtigen Öffnungsrandes des Verdeckkastens verlaufende Achse (11) derart schwenkbar an der Fahrzeugkarosserie angelenkt ist, daß er im Verlauf seiner Öffnungs- und Schließbewegung eine von einer Kippbewegung überlagerte Schwenkbewegung ausführt und in seiner Öffnungsstellung die Öffnung, des Verdeckkastens (4) vollständig freigibt, wobei die Scharniervorrichtungen (5) jeweils aus zwei ein Gelenkhebelparallelogramm (5) bildenden Scharnierarmen (6, 7) bestehen und jeweils eine der Anlenkachsen (13, 9 oder 10, 18) wenigstens eines der Scharnierarme (6, 7) im Verlauf der Öffnungs- oder Schließbewegung des Verdeckkastendeckels (4) zur Ermöglichung einer von einer Kippbewegung überlagerten Schwenkbewegung des Verdeckkastendeckels verlagerbar ist.

2. Anlenkung nach Anspruch 1, **dadurch gekennzeichnet, daß** eine verlagerbare Anlenkachse (13) der karosserieseitigen Schwenklagerung lediglich eines der beiden jeweils ein Gelenkhebelparallelogramm (5) bildenden Scharnierarme (6, 7) zugeordnet ist.

3. Anlenkung nach Anspruch 1 oder 2, **dadurch gekennzeichnet, daß** der verlagerbaren Anlenkachse (13) des einen Scharnierarms (7) jedes Gelenkhebelparallelogrammes jeweils eine Zwangssteuerung zur Erzwingung einer vertikalen Verlagerung in Abhängigkeit von der Schwenkbewegung des Verdeckkastendeckels (14) zugeordnet ist.

4. Anlenkung nach einem der Ansprüche 1 bis 3, **dadurch gekennzeichnet, daß** die eine vertikale Verlagerung der Anlenkachse (13) des einen Scharnierarmes bewirkende Zwangssteuerung durch eine drei untereinander ungleich lange Lenker (14, 15, 16) umfassende Lenkeranordnung gebildet ist.

5. Anlenkung nach einem der Ansprüche 1 bis 4, **dadurch gekennzeichnet, daß** die die Zwangssteuerung zur Verlagerung der Anlenkachse (13) des einen Scharnierarmes (7) bewirkende Lenkanordnung einen Traglenker (14), einen Steuerlenker (15) und einen Koppellenker (16) umfaßt und der Trag- und der Steuerlenker (14, 15) um in einer gemeinsamen Ebene angeordnete Lagerachsen (17, 18) an der Fahrzeugkarosserie (1) angelenkt sind, wobei die Lagerachse (17) des Steuerlenkers (15) koaxial zur Anlenkung (11) des zweiten Scharnierarmes (6) des Gelenkhebelparallelogrammes (5) angeordnet ist.

6. Anlenkung nach einem der Ansprüche 1 bis 5, **dadurch gekennzeichnet, daß** der Abstand der karosserieseitigen Anlenkung des Steuer- und des Traglenkers (14, 15) dem Abstand der Anlenkung des Koppellenkers (16) am Traglenker (14) zu dessen karosserieseitiger Anlenkung entspricht und daß die Länge des Steuerlenkers (15) gleich groß oder kleiner ist als die Hälfte des Abstandes seiner karosserieseitigen Anlenkung (11) zur karosserieseitigen Anlenkung (18) des Traglenkers (14).

7. Anlenkung nach einem der Ansprüche 1 bis 6, **dadurch gekennzeichnet, daß** der Scharnierarm (7) mit einem Abstand zur Anlenkung (19) des Koppellenkers (16) am freien Ende des Traglenkers (14) angelenkt ist.

8. Anlenkung nach einem der Ansprüche 1 bis 7, **dadurch gekennzeichnet, daß** die beiden das Gelenkhebelparallelogramm (5) bildenden Scharnierarme (6, 7) eine an ihre karosserieseitige Schwenklagerung anschließend ausgebildete U-förmige Auskröpfung (20, 21) aufweisen und in Fahrzeuglängsrichtung hintereinanderliegend angeordnet sind.

9. Anlenkung nach einem der Ansprüche 1 bis 8, **dadurch gekennzeichnet, daß** der eine um unveränderliche Schwenkachsen (10, 18) einerseits an der Fahrzeugkarosserie (1) und andererseits am Verdeckkastendeckel (4) angelenkte Scharnierarm (6) den außerhalb seiner Schließlage befindlichen Verdeckkastendeckel (4) trägt und der andere Scharnierarm (7) einen Antriebslenker zur Steuerung der Öffnungsbewegung des Verdeckkastendeckels (4) bildet.

## Claims

1. Linkage for a soft-top compartment lid (4) which is linked by means of two hinge assemblies (5) which are laterally spaced from one another and each consist of at least one hinge arm linked to the vehicle body (1) by means of a first pivot bearing and to the soft-top compartment lid (4) by means of a second pivot bearing so as to pivot about a shaft (11) extending in the region of the rear opening edge of the soft-top compartment in such a way that said soft-top compartment lid (4) performs a pivoting movement superimposed by a tilting movement in the course of its opening and closing movement and completely vacates the opening of the soft-top compartment (4) in its open position, wherein the hinge assemblies (5) each consist of two hinge arms (6, 7) forming a hinge lever parallelogram (5) and one of the respective hinge pins (13, 9) or (10, 18) of at least one of the hinge arms (6, 7) may be displaced in the course of the opening or closing movement of the soft-top compartment lid (4) to allow a pivoting movement of the soft-top compartment lid which is superimposed by a tilting movement.

2. Linkage according to claim 1, **characterised in that** a displaceable hinge pin (13) is associated with the body side pivot bearing of only one of the two hinge arms (6, 7) each forming a hinge lever parallelogram (5).

3. Linkage according to claim 1 or 2, **characterised in that** a respective positive control means for compelling a vertical displacement as a function of the pivoting movement of the soft-top compartment lid (14) is associated with the displaceable hinge pin (13) of one hinge arm (7) of each hinge lever parallelogram.

4. Linkage according to any of claims 1 to 3, **characterised in that** the positive control means which brings about a vertical displacement of the hinge pin (13) of one hinge arm is formed by a rod arrangement comprising three rods (14, 15, 16) of different lengths from one another.

5. Linkage according to any of claims 1 to 4, **characterised in that** the rod arrangement bringing about the positive control for displacement of the hinge pin (13) of one hinge arm (7) comprises a holding rod (14), a control rod (15) and a coupling rod (16), and the holding rod and the control rod (14, 15) are linked to the vehicle body (1) about bearing shafts (17, 18) arranged in a common plane, wherein the bearing shaft (17) of the control rod (15) is arranged coaxially to the linkage (11) of the second hinge arm (6) of the hinge lever parallelogram (5).

6. Linkage according to any of claims 1 to 5, **characterised in that** the distance between the body-side linkage of the control rod and the holding rod (14, 15) corresponds to the distance between the linkage of the coupling rod (16) on the holding rod (14) and the body-side linkage thereof and **in that** the length of the control rod (15) is equal to or smaller than half of the distance between its body-side linkage (11) and the body-side linkage (18) of the holding rod (14).

7. Linkage according to any of claims 1 to 6, **characterised in that** the hinge arm (7) is linked to the free end of the holding rod (14) at a distance from the linkage (19) of the coupling rod (16).

8. Linkage according to any of claims 1 to 7, **characterised in that** the two hinge arms (6, 7) forming the hinge lever parallelogram (5) have a U-shaped bend (20, 21) adjacent to their body-side pivot bearing and are arranged in succession in the longitudinal direction of the vehicle.

9. Linkage according to any of claims 1 to 8, **characterised in that** the hinge arm (6) linked about invariable pivot shafts (10, 18) on the one hand to the vehicle body (1) and on the other hand to the soft-top compartment lid (4) carries the soft-top compartment lid (4) located outside its closed position and the other hinge arm (7) forms a drive rod for controlling the opening movement of the soft-top compartment lid (4).

## Revendications

1. Dispositif d'articulation pour un couvercle de coffre de capote (4), qui est articulé sur la carrosserie du véhicule, de façon à pouvoir pivoter autour d'un axe (11) s'étendant dans la zone du bord arrière d'ouverture du coffre de capote, au moyen de deux dispositifs à charnière (5), espacés l'un de l'autre et chacun constitué d'au moins un bras de charnière, articulé sur la carrosserie (1) du véhicule au moyen d'un premier palier de pivotement et articulé sur le couvercle de coffre de capote (4) au moyen d'un deuxième palier de pivotement, de manière que, au cours de son déplacement d'ouverture et de fermeture, le couvercle effectue un mouvement de pivotement, auquel est superposé un mouvement de basculement et, à sa position d'ouverture, libère complètement l'ouverture du coffre de capote (4), les dispositifs à charnière (5) étant chacun constitués de deux bras de charnière (6; 7) formant un parallélogramme à leviers articulés (5) et, chaque fois, l'un des axes d'articulation (13, 9 ou 10, 18) d'au moins l'un des bras de charnière (6, 7) étant déplaçable au cours du déplacement d'ouverture ou de fermeture du couvercle de coffre de capote (4), pour permettre un mouvement de pivotement, auquel se superpose un mouvement de basculement, du couvercle de coffre de capote.

2. Dispositif d'articulation selon la revendication 1, **caractérisé en ce qu'**un axe d'articulation (13) déplaçable est associé au palier de pivotement, situé côté carrosserie, de uniquement l'un des deux bras de charnière (6, 7), formant chaque fois un parallélogramme à leviers articulés (5).

3. Dispositif d'articulation selon l'une des revendications 1 ou 2, **caractérisé en ce que** à l'axe d'articulation (13) déplaçable d'un premier bras de charnière (7) de chaque parallélogramme à leviers articulés, est chaque fois associée une commande forcée devant contraindre à un déplacement vertical en fonction du mouvement de pivotement du couvercle de coffre de capote (14).

4. Dispositif d'articulation selon l'une des revendications 1 à 3, **caractérisé en ce que** la commande forcée, provoquant un déplacement vertical de l'axe d'articulation (13) d'un premier bras de charnière, est formée par un agencement à bras articulés, comprenant trois bras articulés (14, 15, 16) ayant entre eux des longueurs différentes.

5. Dispositif d'articulation selon l'une des revendications 1 à 4, **caractérisé en ce que** l'agencement à bras articulés, provoquant la commande forcée du déplacement de l'axe d'articulation (13) d'un premier bras de charnière (7), comprend un bras articulé support (14), un bras articulé de commande (15) et un bras articulé de couplage (16), et les bras articulés support et de commande (14, 15) étant articulés sur la carrosserie (1) du véhicule, autour d'axes de tourillonnement (17, 18) disposés dans un plan commun, l'axe de tourillonnement (17) du bras articulé de commande (15) étant disposé coaxialement par rapport à l'articulation (11) du deuxième bras de charnière (6) du parallélogramme à leviers articulés (5).

6. Dispositif d'articulation selon l'une des revendications 1 à 5, **caractérisé en ce que** l'espacement de l'articulation située côté carrosserie des bras articulés de commande et support (14, 15) correspond à l'espacement de l'articulation du bras articulé de couplage (16) sur le bras articulé support (14) par rapport à son articulation côté carrosserie, et **en ce que** la longueur du bras articulé de commande (15) est égale ou inférieure à la moitié de l'espacement entre son articulation (11) située côté carrosserie et l'articulation (18), située côté carrosserie, du bras articulé support (14).

7. Dispositif d'articulation selon l'une des revendications 1 à 6, **caractérisé en ce que** le bras de charnière (7) est articulé sur l'extrémité libre du bras articulé support (14), à distance par rapport à l'articulation (19) du bras articulé de couplage (16).

8. Dispositif d'articulation selon l'une des revendications 1 à 7, **caractérisé en ce que** les deux bras de charnière (6, 7) formant le parallélogramme à leviers articulés (5) présentent un coudage (20, 21) en forme de grand U, se raccordant à leurs paliers de pivotement situés côté carrosserie, et sont disposés l'un derrière l'autre dans la direction longitudinale du véhicule.

9. Dispositif d'articulation selon l'une des revendications 1 à 8, **caractérisé en ce que** le bras de charnière (6) articulé autour d'axes de pivotement (10, 18) non modifiables, d'une part, sur la carrosserie (1) du véhicule et, d'autre part, sur le couvercle de coffre de capote (4), porte le couvercle de coffre de capote (4) se trouvant hors de sa position de fermeture et l'autre bras de charnière (7) forme un bras articulé d'entraînement pour la commande du mouvement d'ouverture du couvercle de coffre de capote (4).
